# EUROPEAN PATENT APPLICATION

(11) **EP 0 579 402 A1**
(43) Date of publication of application: **19.01.1994**
(21) Application number: 93305018.9
(22) Date of filing: 28.06.1993
(51) Int. Cl.: G06F 3/14

(54) **Nubus dual display card**

(30) Priority: 30.06.1992 US 906509
(71) Applicant: LORAL AEROSPACE CORPORATION, New York, NY 10016 (US)
(72) Inventor: Youngman, Eric, San Jose, CA 95129 (US); McReynolds, John, San Jose, CA 95122 (US); Fox, Christopher M., Santa Clara, CA 95054 (US); Blume, David, B136, Sunnyvale 94087 (US); Di Stefano, Charles, B136, Sunnyvale 94087 (US)
(74) Representative: Vaufrouard, John Charles

(57) **Abstract**

A dual display generator card (10) that is insertable into a Nubus card slot of a computer system (12) that permits the simultaneous generation of images for two display monitors (13, 14). The dual display generator card (10) includes a Nubus computer interface (21) and two display channels (30a, 30b). Each display channel (30a, 30b) includes a channel memory buffer (31, 32), two parallel video translators (33), and a digital to analog converter (36). Video output signals from the each display channel (30a, 30b) are provided from the digital to analog converter (36) and are coupled to each respective video display monitor (13, 14). Appropriate timing, address, and control hardware are provided to control the generation of video signals. Overlay information derived from the computer system (12) may be overwritten on pixel data to support annotation of images rendered on the display monitors (13, 14). The result is a composite image provided on the two monitors (30a, 30b). Each of the two images is a combination of pixel image data from the display card (10) and the overlay data generated by the computer system (12). The CPU of the computer system is not required to manipulate the image pixels. Consequently, the CPU only has to process the overlay information, a small part of the overall information content displayed on the display monitors (13, 14), and hence the speed of image generation is improved.

## Description

### BACKGROUND

The present invention relates generally to computer video displays, and more particularly, a dual display generator card that may be installed on a Nubus computer bus that permits the simultaneous generation of images for two video displays coupled to the card.

A typical system configuration for a computer system, such as a Macintosh brand personal computer, for example, includes one video display coupled to a video display card or to a video port of the CPU motherboard. The Macintosh personal computer can support multiple displays by installing multiple commercial display generator cards into the existing Nubus card slots that are part of the computer. The cost of the display cards may be decreased and the number of displays that can be supported may be increased if one display generator card is capable of driving more than one display.

Therefore, it is an objective of the present invention to provide for apparatus that may be installed on a computer bus and that provides for simultaneous generation of images for two video displays.

### SUMMARY OF THE INVENTION

In order to achieve the above and other objectives, the present invention provides for a dual display card that is suitable for use with a computer having a computer bus, such as a Nubus computer bus that is used in a Macintosh brand personal computer. The dual display card simultaneously generates video images for two display monitors coupled to the card.

The dual display card comprises a computer interface, a plurality of control circuits and two display channels. The plurality of control circuits include a declaration read only memory (ROM), an address generator, an address decoder, and a controller, all of which are coupled to the computer bus. Each display channel includes a channel memory buffer, a plurality of parallel TTL to ECL translators, and a digital to analog converter. The digital to analog converter includes a lookup table that is accessed by way of the Nubus interface to control the selection of grey scales displayed on each of the displays. Video output signals from the each display channel are provided from the digital to analog converter and are coupled to a respective video display.

A controller provides control signals to the components of the display card to control processing of the video image data in order to make the card operate in a compatible manner with the computer. An address decoder decodes address bits to generate control signals (chip select signals) for addressing different portions of the display card. An address generator is coupled between the computer interface and the channel memory buffer of each of the display channels for generating row and column addresses for video RAM (VRAM) used during video data transfer cycles. A declaration read only memory is coupled to the computer interface that contains drivers and parameters that allow the computer to interface to the display card and to properly operate on the computer bus. A timing controller is coupled to the Nubus interface that provides timing signals that control the timing of images generated for the video displays.

Overlay information derived from the computer system may be overwritten on the pixel data to support annotation of images rendered on the displays. The video display generator card thus displays image information (pixels) overlaid with information from the Macintosh personal computer derived from conventional Macintosh draw activities. The result is a composite image provided on the two displays. Each of the two images is a combination of pixel image data from the image memory display card and the overlay data generated by the CPU of the computer system. The CPU of the computer system is therefore not required to manipulate the image pixels. Consequently, the CPU of the computer system only has to process the overlay information, which constitutes a small part of the overall information content displayed on the screens of the displays. As a result, the speed of image generation is improved.

### BRIEF DESCRIPTION OF THE DRAWINGS

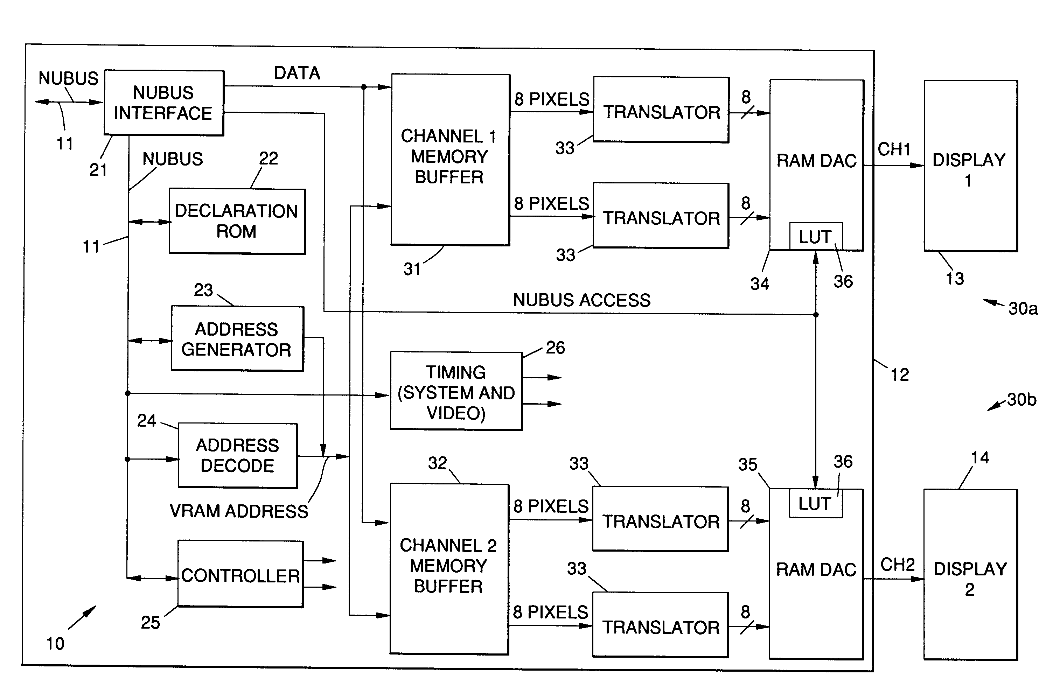

The various features and advantages of the present invention may be more readily understood with reference to the following detailed description taken in conjunction with the accompanying drawings, wherein like reference numerals designate like structural elements, and in which the sole figure of the drawing shows a block diagram of a dual display card in accordance with the principles of the present invention that is suitable for use with a Nubus computer bus.

### DETAILED DESCRIPTION

Referring to the sole drawing figure, it shows a block diagram of a dual display generator card 10 in accordance with the principles of the present invention that is suitable for use with a computer bus 11 that forms part of a computer system 12. The dual display generator card 10 is adapted to simultaneously generate video images for two displays 13, 14 that are coupled to the card 10. The display generator card 10 of the present invention has been specifically designed for use with a Macintosh brand personal computer having a Nubus computer bus. However, it is to be understood that other computers employing other computer busses may readily employ the principles of the present invention.

With regard to the specific embodiment illustrated in the drawing figure, the dual display generator card 10 is comprised of a Nubus interface 21 that interfaces the card 10 to a Nubus computer bus 11. A declaration read only memory (ROM) 22, address generator 23 and address decoder 24 that are adapted to provide VRAM addresses, and a controller 25 are coupled to the Nubus computer bus 11. The declaration ROM 22, address generator 23, and address decoder 24 provide the control logic that interfaces the display generator card 10 to the computer system 12 by way of the Nubus interface 11. The controller 25 provides control signals to the components of the display card 10 to control processing of the video image data and to ensure that the display generator card 10 operates in a compatible manner with the computer system 12. A timing controller 26 (comprising a programmable synch generator) is also coupled to the Nubus computer bus 11 and is interfaces to the clock of the computer system 12 in order to provide timing signals to control the timing of the video data applied to the video displays 12, 13.

The declaration read only memory 22 may be a model AT28HC256L-12JC declaration ROM manufactured by Atmel, for example. The address generator 23 may be a model 74ACT715SC address generator manufactured by National Semiconductor, for example. The address decoder 24 may be a plurality of model 22V10 GAL address decoders manufactured by Lattice Semiconductor, Incorporated, for example. The controller 25 may be a plurality of model 22V10 GAL controllers manufactured by Lattice Semiconductor, for example. Information regarding the design of the Nubus interface 21 may be obtained by reading of a book entitled "Designing Nubus Cards for the Macintosh", available from Apple Computer, Inc., for example. Furthermore, those skilled in the art of computer and video processor design may employ readily available application notes and other publications available from manufacturers of the devices employed in the display generator card 10 of the present invention to assist in interconnecting the components thereof.

The declaration read only memory 22 contains drivers and parameters that allow the computer system 12 to interface to the display generator card 10 and allow the card 10 to properly operate on the computer bus 11. The address generator 23 functions to generate row and column addresses for video RAM (VRAM) (the memory buffers 31, 32) used during video data transfer cycles. The address decoder 24 functions to decode address bits to generate control signals (chip select signals) for addressing different portions of the display generator card 10. The controller 25 provides control signals to the components of the display generator card 10 to control processing of the video image data in order to make the card 10 operate in a compatible manner with the computer system 12.

The specific embodiment of the dual display generator card 10 shown in the drawing figure is comprised of first and second substantially identical video processing channels 30a, 30b. The first channel 30a is comprised of a channel memory buffer 31, such as a model TC524256BJ-10 manufactured by Toshiba, that is coupled to four model BT424 TTL to ECL translators 33 manufactured by Brooktree, Incorporated, which are in turn coupled to a first BT492 RAM digital to analog converter 34 manufactured by Brooktree, Incorporated. The digital to analog converter 34 includes a lookup table (LUT) 36 that is accessed from the Nubus computer bus 11 by way of the Nubus interface 21. Video output signals from the first channel 30a are provided from the first digital to analog converter 36 and are coupled to the first video display 13. In a similar manner, the second channel 30b is comprised of a second channel memory buffer 32, that is coupled to four model BT424 TTL to ECL translators 33, which are in turn coupled to a second BT492 RAM digital to analog converter 35. The TTL to ECL translators 33 provide for 16 to 2 time division multiplexing of the data provided thereto. The digital to analog converter 35 also includes a lookup table (LUT) 36 comprising a random access memory (RAM) that is accessed from the Nubus computer bus 11 by way of the Nubus interface 21. The lookup table 36 is software configurable and is employed to re-map grey scales that are displayed on the video displays 13, 14. Video output signals from the second channel 30b are provided from the second RAM digital to analog converter 36 and are coupled to the second video display 14. The displays may be a Tektronix 1.5k by 2k 256 level grey scale monitor, or an Image Systems 1k by 1.25 K 256 level grey scale monitor, for example.

The two channel memory buffers 31, 32 of the dual display card 10 are adapted to hold pixel image data prior to display. The image data is coupled by way of the Nubus interface 21 to each of the memory buffers 31, 32. Overlay information derived from the computer system 12 may be overwritten on the pixel data to support annotation of images rendered on the displays 13, 14. The result is a composite image provided on the two displays 13, 14. Each of the two images is a combination of pixel image data from the present image memory card 10 and the overlay data generated by the CPU of the computer system 12. The CPU of the computer system 12 is not required to manipulate the image pixels. Consequently, the CPU of the computer system 12 only has to process the overlay information, a small part of the overall information content displayed on the screens of the displays 13, 14.

Thus there has been described a new and improved dual display generator card that may be installed on a Nubus computer bus that permits the simultaneous generation of images for two video displays. It is to be understood that the above-described embodiment is merely illustrative of some of the many specific embodiments which represent applications of the principles of the present invention. Clearly, numerous and other arrangements can be readily devised by those skilled in the art without departing from the scope of the invention.

## Claims

1. A video display generator card (10) that is adapted for use with a computer system having a computer bus (11) and that is adapted to simultaneously generate video signals for two video displays (13, 14) coupled thereto, said display generator card (10) characterized by:
an interface circuit (21) that is adapted to be coupled to the computer bus (11);
first and substantially identical display channels (30a, 30b) coupled to the interface circuit (21) that are adapted to receive video image data transmitted over the computer bus (11) and coupled by way of the interface circuit (21) thereto, each display channel (30a, 30b) comprising:
a channel memory buffer (31, 32) comprising a video memory;
a plurality of video data translator circuits (33) coupled to the channel memory buffer (31, 32); and
a digital to analog converter (36) that is adapted to be coupled to a respective one of the video displays (13, 14);
an address decoder (24) that decodes address bits to generate control signals therefor;
a declaration read only memory (22) coupled to the computer interface that comprises drivers and parameters that allow the computer system to interface to the display generator card (10) and to properly operate on the computer bus (11);
an address generator (230 coupled between the computer interface and the channel memory buffer (31, 32) of each of the display channels (30a, 30b) for generating row and column addresses for video memory used during video data transfer cycles;
a controller (25) coupled to the computer interface that is adapted to provide control signals to the components of the display channels (30a, 30b) to control processing of the video image data; and
a timing controller (26) coupled to the computer interface that is adapted to provide timing signals that control the timing of images generated for the video displays (13, 14).

2. The video display generator card (10) of Claim 1 wherein the digital to analog converter (36) is characterized by a lookup table that is accessible from the computer bus (11) by way of the interface circuit (21), and which is adapted to provide for selection of a plurality of colors and grey scales that are displayed on the video displays (13, 14).

3. A video display generator card (10) that is adapted for use with a computer system having a Nubus computer bus (11) and that is adapted to simultaneously generate video signals for two video displays (13, 14) coupled thereto, said display generator card (10) characterized by:
an interface circuit (21) that is adapted to be coupled to the Nubus computer bus (11);
first and substantially identical display channels (30a, 30b) coupled to the interface circuit (21) that are adapted to receive video image data transmitted over the Nubus computer bus (11) and coupled by way of the interface circuit (21) thereto, each display channel (30a, 30b) comprising:
a channel memory buffer (31, 32) comprising a video memory;
a plurality of video data translator circuits (33) coupled to the channel memory buffer (31, 32); and
a digital to analog converter (36) that is adapted to be coupled to a respective one of the video displays (13, 14);
an address decoder (24) that decodes address bits to generate control signals therefor;
a declaration read only memory (22) coupled to the computer interface that comprises drivers and parameters that allow the computer system to interface to the display generator card (10) and to properly operate on the Nubus computer bus (11);
an address generator (23) coupled between the computer interface and the channel memory buffer (31, 32) of each of the display channels (30a, 30b) for generating row and column addresses for video memory used during video data transfer cycles;
a controller (25) coupled to the computer interface that is adapted to provide control signals to the components of the display channels (30a, 30b) to control processing of the video image data; and
a timing controller (26) coupled to the computer interface that is adapted to provide timing signals that control the timing of images generated for the video displays (13, 14).

4. The video display generator card (10) of Claim 3 wherein the digital to analog converter (36) is characterized by a lookup table that is accessible from the computer bus (11) by way of the interface circuit (21), and which is adapted to provide for selection of a plurality of colors and grey scales that are displayed on the video displays (13, 14).

5. A video display generator card (10) that is adapted for use with a computer system having a computer bus (11) and that is adapted to simultaneously generate video signals for two video displays (13, 14) coupled thereto, said display generator card (10) characterized by:
an interface circuit (21) that is adapted to be coupled to the computer bus (11);
first and substantially identical display channels (30a, 30b) coupled to the interface circuit (21) that are adapted to receive video image data transmitted over the computer bus (11) and coupled by way of the interface circuit (21) thereto, each display channel (30a, 30b) comprising:
a channel memory buffer (31, 32) comprising a video memory;
a plurality of video data translator circuits (33) coupled to the channel memory buffer (31, 32); and
a digital to analog converter (36) that comprises a lookup table that is accessible from the computer bus (11) by way of the interface circuit (21), and which is adapted to provide for selection of a plurality of colors and grey scales that are displayed on the video displays (13, 14), and that is adapted to be coupled to a respective one of the video displays (13, 14);
an address decoder (24) that decodes address bits to generate control signals therefor;
a declaration read only memory (22) coupled to the computer interface that comprises drivers and parameters that allow the computer system to interface to the display generator card (10) and to properly operate on the computer bus (11);
an address generator (23) coupled between the computer interface and the channel memory buffer (31, 32) of each of the display channels (30a, 30b) for generating row and column addresses for video memory used during video data transfer cycles;
a controller (25) coupled to the computer interface that is adapted to provide control signals to the components of the display channels (30a, 30b) to control processing of the video image data; and
a timing controller (26) coupled to the computer interface that is adapted to provide timing signals that control the timing of images generated for the video displays (13, 14).
